# EUROPEAN PATENT SPECIFICATION

(11) **EP 4 506 842 B1**
(45) Date of publication and mention of the grant of the patent: **25.02.2026**
(21) Application number: 23190408.7
(22) Date of filing: 08.08.2023
(51) Int. Cl.: G06F 21/53, G06F 21/57, G06F 9/4401, G06F 9/455

(54) **METHOD FOR PERFORMING A VERIFIED LAUNCH OF A VIRTUAL MACHINE**
VERFAHREN ZUR DURCHFÜHRUNG EINES VERIFIZIERTEN STARTS EINER VIRTUELLEN MASCHINE
PROCÉDÉ POUR EFFECTUER UN LANCEMENT VÉRIFIÉ D'UNE MACHINE VIRTUELLE

(43) Date of publication of application: 12.02.2025
(73) Proprietor: Cysec SA, 1003 Lausanne (CH)
(72) Inventor: Fortunato Ferreira, Filipe, 1860 Aigle (CH)
(74) Representative: Plasseraud IP

(56) References cited:
- USTIUKHIN ARTEMI: "EXPLORING APPROACHES FOR SECURE WORKLOAD DEPLOYMENT AND ATTESTATION IN VIRTUALIZATION-BASED CONFIDENTIAL COMPUTING ENVIRONMENT", 1 May 2022 (2022-05-01), XP093122653, Retrieved from the Internet <URL:https://lutpub.lut.fi/bitstream/handle/10024/164226/Artemii_Ustiukhin_LUT_Thesis_final.pdf?sequence=1&isAllowed=y> [retrieved on 20240123]
- BANKS A S ET AL: "Remote Attestation: A Literature Review", ARXIV.ORG, December 2020 (2020-12-01), XP081958640
- AMD: "SEV Secure Nested Paging Firmware ABI Specification, Revision 0.9", AMD PUBLICATION, 1 April 2021 (2021-04-01), XP093122730, Retrieved from the Internet <URL:https://kib.kiev.ua/x86docs/AMD/SEV/56860-r0.9.pdf> [retrieved on 20240123]
- AMD: "AMD SEV-SNP: Strengthening VM Isolation with Integrity Protection and More", AMD WHITE PAPER, 1 January 2020 (2020-01-01), XP093122710, Retrieved from the Internet <URL:https://www.amd.com/content/dam/amd/en/documents/epyc-business-docs/white-papers/SEV-SNP-strengthening-vm-isolation-with-integrity-protection-and-more.pdf> [retrieved on 20240123]

## Description

### Background

### Technical field

The present application relates to a method for performing a verified launch of a virtual machine. More specifically, the application relates to a method for performing a verified launch of a virtual machine based on remote attestation.

### Related art

Most companies working with confidential or critical information are held to stringent requirements and regulations regarding their handling, processing and storage of said information. Most of the time, those requirements are tied to the confidentiality and integrity of the data at rest, in transit and in use. This, in turn, imposes quite significant restrictions to the hardware they can use, along with its geographical location, due to governmental oversight concerns. Cloud Service Providers (CSPs) such as Amazon, Google, Microsoft provide, among many other services, computer infrastructure in the form of virtual machines that their clients may use to host their applications, databases, back-end logic and such.

While protection of the confidentiality and integrity of the data at rest and in transit to and from infrastructure provided by CSPs would be reasonable to achieve through pre-existing technologies, adequate protection of data in use would be much more difficult to achieve. As such, due to the constraints imposed to companies handling confidential or critical data, they would be unable to make use of the CSPs' offerings.

Trusted Computing comes as a stepping-stone technology that allows hardware manufacturers to ensure that only authorised code may run on a system. Most mechanisms rely upon the use of digital signatures to authenticate code, and by burning relevant cryptographic material to support this code authentication within the hardware itself.

Confidential Computing technologies rise as a logical next step, providing the ability of protecting the confidentiality and integrity of data at use. Confidential Computing is the protection of applications and data in use by a hardware-based TEE (Trusted Execution Environment). Though the use of Trusted-Computing-capable hardware, a Trusted Execution Environment (TEE) is provided such that the data in use is only accessible by the code running in the TEE. Confidential Computing also provides the means to ensure that only authorised code may run within the TEE.

While this would satisfy the basic requirements of some companies working with confidential or critical data, they would still need to ensure that only expected code is running within a distant or shared TEE.

To help ensure the right code is running within the TEE, the hardware backing the Trusted Execution Environment provides mechanisms known as remote attestation which allow the hardware and its developers to endorse the code running within the TEE. This mechanism allows for relevant parties to receive an attestation report signed by the TEE owner or hardware developer containing relevant information (firmware versions, policies, content hashes, ...) necessary to ensure that the TEE is in an expected and valid state and take appropriate trust decisions regarding the TEE itself.

Remote attestation is a way of proving that a computer system is trustworthy: it allows a program to authenticate itself and it is a means for one system (a trusted device) to make reliable statements about the software it is running to another system. The remote party can then make authorization decisions based on this information.

Remote attestation consists of protocols and cryptographic primitives to remotely assert the state of systems on untrusted devices to guarantee their trustworthiness. Some examples of hardware technologies offering remote attestation building blocks include Intel SGX, AMD SEV-SNP, and Intel TDX.

Known virtual machine remote attestation protocols are often conducted once a system has fully started and has had time to interact with other computer systems (for system updates, time synchronisation, configuration, ...). There are inherent security risks in allowing a system to fully start and interact with outside systems prior to asserting its trustworthiness.

Document Ustiukhin Artemi: "EXPLORING APPROACHES FOR SECURE WORKLOAD DEPLOYMENT AND ATTESTATION IN VIRTUALIZATION-BASED CONFIDENTIAL COMPUTING ENVIRONMENT", 1 May 2022 (2022-05-01), XP093122653 discloses computing platforms for workload deployment and remote attestation.

Document BANKS A S ET AL: "Remote Attestation: A Literature Review", ARXIV.ORG, XP081958640 discloses state-of-the-art remote attestation.

There is therefore the need to have a method for asserting the trustworthiness of a system before its remote start, earlier with respect to what it is currently done in known systems, thus overcoming the problems of the prior art.

### Summary

In a first aspect, there is provided a method for performing a verified launch of a virtual machine comprising:
- sending, from a virtual machine to a server, a predetermined attested value, said attested value being set inside a field of a remote attestation protocol running in a host system underlying the virtual machine;
- sending, from the server to the virtual machine, a random challenge value as a confirmation reply;
- sending, from the virtual machine to the server, an attestation report function of said predetermined attested value and random challenge value;
- checking if the attestation report is valid and in positive case, authenticating the virtual machine with the server.

In embodiments, the attestation report comprises:
- initial measurements of a memory of the virtual machine;
- the random challenge value;
- the predetermined attested value.

In embodiments, checking if the attestation report is valid comprises checking if the initial measurements correspond to expected predefined measurements, if the random challenge value of the attestation report corresponds to the random challenge value sent by the server and if the predetermined attested value of the attestation report corresponds to the one sent from the virtual machine to the server.

In embodiments, authenticating the virtual machine with the server comprises sending to the virtual machine a predetermined cryptographic key.

In embodiments, the predetermined attested value is set inside the SEV-SNP HOST_DATA field of an AMD SEV-SNP remote attestation protocol.

In embodiments, the predetermined attested value is set inside the Trust Domain MRCONFIGID field of an Intel TDX remote attestation protocol.

In further aspects there is provided a computer program product comprising computer readable instructions which, when implemented on a system comprising a server and a virtual machine, perform all of the steps of the method of the first aspect, and a computer readable medium comprising such a computer program.

### Brief description of the drawings

The invention will now be described with reference to the accompanying Figures of which:
Figure 1 illustrates virtual machine performing a verified launch according of the present invention.
Figure 2 illustrate the steps of a method for performing a verified launch of a virtual machine according to the present invention.

### Detailed Description

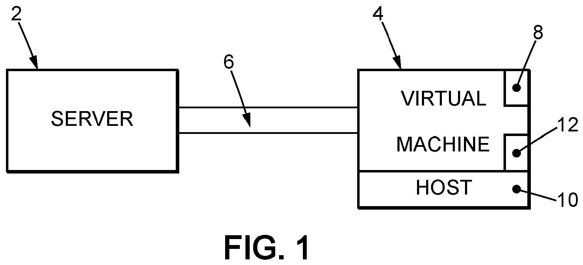

Figure 1 illustrates a central management server 2 and a remote virtual machine 4 connected each other through a channel 6. The channel 6 is confidential, authenticated and integrity-preserving. Its confidentiality is required to ensure that sensitive communications post-authentication (post-launch) are not trivially stolen. Advantageously, the channel 6 is a TLS channel with server-side authentication through pre-provisioned TLS root certificates.

The method for performing a verifed launch of a virtual machine according to the present disclosure implements an authentication mechanism that allows the remote virtual machine 4 to authenticate with the central management server 2. The method relies upon a pre-existing remote attestation mechanism available to the remote virtual machine 4, to root the server's trust in the remote virtual machine 4.

The underlying remote attestation mechanism is the root of trust from which the method for performing a verified launch of a virtual machine derives most of its security. As such, the underlying remote attestation mechanism must remain secure and resilient to attacks from passive and active adversaries.

The underlying remote attestation mechanism, per se known, provides the following capabilities to be suitable for use by the method for performing a verified launch of a virtual machine of the present invention:
- allow repeatable and pre-calculable measurements of initial contents of a memory 8 of the virtual machine 4 at launch;
- allow for a predetermined attested value to be set by a host system 10 underlying the virtual machine 4 at the launch of the virtual machine 4, said predetermined attested value being immutable throughout the lifetime of the virtual machine 4;
- allow the virtual machine 4 to request an attestation report containing the following:
   - the above-mentioned measurements;
   - the predetermined attested value set at launch of the virtual machine 4,
   - a random challenge value set at the request of the attestation report;
- allow for the attestation report to be verified by any third party.

The predetermined attested value, which must be included in the attestation report, is a value representative of the virtual machine 4. This value is used to distinguish multiple instances of virtual machines containing the same code. The attested value is very important for distinguishing multiple instances of the virtual machine 4 using a same virtual machine code, such that they use different cryptographic keys.

The method for performing a verified launch of a virtual machine is designed such that the remote virtual machine 4 may securely run within an untrustworthy underlying host system 10. A passive or active adversary may manage this underlying host system 10, looking to defeat the security of the method for performing a verified launch of a virtual machine, but he will not be able to defeat the security granted by the underlying remote attestation mechanism.

The method for performing a verified launch of a virtual machine according to the present invention is designed as a *"challenge-response"* authentication mechanism and it is performed by a control unit 12 of the virtual machine 4.

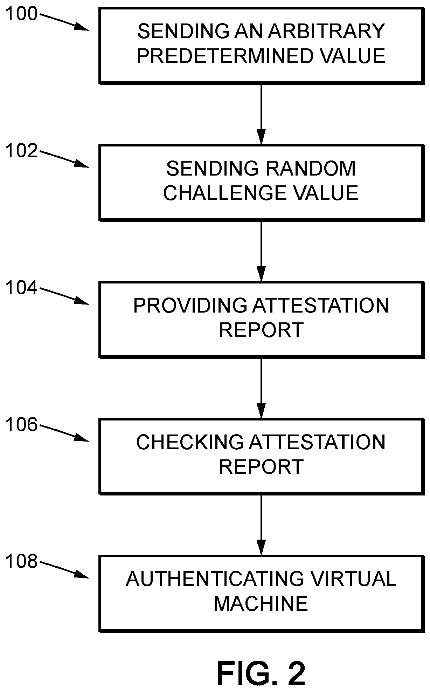

Figure 2 shows the step of the method for performing a verified launch of a virtual machine according to the present invention.

In a first step 100, the control unit 12 of the virtual machine 4 (in the following simply the *"virtual machine 4")* initiates a communication by sending to the server 2 a predetermined attested value.

The predetermined attested value is set inside a field of an underlying remote attestation protocol running in the host system 10, as below detailed, such that the predetermined attested value exhibits the following properties:
- is defined prior to the launch of the virtual machine;
- is immutable throughout the lifetime of the virtual machine;
- is contained within the attestation report.

This implies that the attested value is set before launching the virtual machine 4, it can't be changed once the virtual machine 4 is launched and it is possible to directly or indirectly (e.g., through a cryptographic hash) ascertain its value through a remote attestation report.

In a second further step 102 the server 2 sends to the virtual machine 4 a random challenge value as a confirmation reply.

In a further step 104, the virtual machine 4 sends to the server 2 an attestation report comprising the following information:
- initial measurements of the contents of its memory 8 carried out in a manner per se known;
- the random challenge value received from the server 2;
- the predetermined attested value used to initiate the communication, which was previously stored within an immutable field of the memory 8 of the virtual machine 4.

The initial measurements of the contents of the memory 8 of the virtual machine 4 comprise the cryptographic hash and their layout at the precise moment the virtual machine 4 is about to be started. e.g., the initial virtual machine firmware. In particular, the cryptographic hashes of various hardware-specific pieces of code (CPU microcode, CPU firmeware, Intel TDX/ AMD SEV-SNP firmeware, ...), along with various hardware-capabilities afforded to the virtual machine 4 (VM migration, VM debug, CPU features, ...)

In a step 106 the server 2 checks if the attestation report (or any of its contents) is valid and, in negative case, it interrupts the communication. In particular, in order to check the validity of the attestation report, the server 2 checks if the initial measurements correspond to expected predefined measurements, if the challenge value contained in the attestation report corresponds to the one previously sent by the server 2 itself and if the predetermined attested value contained in the attestation report corresponds to the one provided at step 100 to initiate the communication.

The server 2 may also interrupt the communication if any contextual information contained in the attestation report is not as expected (debug flags, version numbers, ...) according to a predefined appraisal policy.

Finally, in a step 108 the virtual machine 4 is authenticated with the server 2, and further sensitive data (cryptographic material, confidential material, configuration data, ...) are exchanged between them on this basis. The authentication is required to ensure that the virtual machine 4 only communicates with the authorized server 2 and that a trivial Man-In-The-Middle does not defeat the communication security. The sever 2, in order to authenticate the virtual machine 4, sends to the virtual machine 4 a predetermined cryptographic key to be used by the virtual machine 4 to finish its launching and for future uses such as to decrypt hard disks and ensure they have not been tampered with).

In an embodiment, the virtual machine 4 is launched through the known AMD SEV-SNP confidential virtual machine protocol. Through this remote attestation protocol, the predetermined attested value is set inside the SEV-SNP HOST_DATA field, which can only be set before launching the virtual machine 4 and may not be edited by either the underlying host system 10 running the virtual machine 4 or the virtual machine 4 itself.

The SEV-SNP HOST_DATA field is used in the present invention for purposes outside its original specification which was for the host managing a virtual machine to describe it for its own purposes. In the present invention the SEV-SNP HOST_DATA field is used to carry an arbitrary value that is entirely useless to the underlying host system 10.

In the case of the AMD SEV-SNP technology, only the virtual machine 4 itself may provide the attestation report, due to such requests being encrypted through an integrity-preserving encryption scheme (AEAD) by an encryption key (a VM-specific key (VMPCK)) that the underlying host system 10 does not know.

The encryption key, which is different from the cryptographic key above mentioned, is never visible and stored in the control unit 12 of the virtual machine 4, and it is used in a manner per se known to provide the attestation report.

In the case of the AMD SEV-SNP technology, all data that was copied into the virtual machine memory 8 before starting it, along with where they were copied, are measured. This means that the initial contents of the memory 8 of the virtual machine 4 are fully measured, and it is also possible to pre-calculate such data due to virtual machine start conventions dictating memory locations.

In an alternative embodiment, the virtual machine 4 is launched through the known Intel Trust Domain Confidential (Intel TDX) virtual machine protocol. Through this protocol, the predetermined attested value is set inside the Trust Domain MRCONFIGID field, which can be set before launching the virtual machine 4 and may not be edited by either the underlying host system 10 running the virtual machine 4 or the virtual machine 4 itself.

In the case of the Intel TDX technology, only the virtual machine 4 itself may provide the attestation report, due to the request of the attestation report being only available from a Trust Domain (the virtual machine 4), and not from host system 10.

The method for performing a verified launch of a virtual machine of the present invention is a client-server protocol in which the server 2 relies upon the remote attestation (AMD SEV-SNP or Intel TDX protocol) to establish trust in the remote virtual machine 4 according to a given policy.

If trust in the virtual machine 4 is established through the steps above discussed, the server 2 releases the predetermined cryptographic key to the virtual machine 4.

Two distinct instances with a same virtual machine code would get different cryptographic keys, but two instances using the same predefined attested value would get the same cryptographic key.

A feature of this method is the ability to associate different secrets to distinct instances of a same virtual machine image based upon pairing the virtual machine image with the server 2. This is accomplished by using the predetermined attested value (acting as the identifier of the virtual machine 4) to determine the cryptographic key to provide within the protocol.

The method according to the present invention ensures:
- that the virtual machine 4 only talks to the expected server 2, thanks to a unilaterally authenticated encrypted TLS channel that only authenticates the server 2;
- that the server 2 only discloses the secret cryptographic key to a valid virtual machine 4 (remote attestation) and not to any other virtual machine, achieved by relying on remote attestation to assert the validity of the virtual machine 4 and its execution context according to a predetermined policy.

It is known that it would be impossible to use a proper secret-based cryptographic authentication mechanisms due to the impossibility of keeping a pre-provisioned secret hidden from the underlying host system 10 that runs the guest virtual machine 4. This problem is solved by the present invention by forcing the virtual machine 4 to set an arbitrary, read-only, attested value at the launch and by using this predetermined attested value to bind the secret encryption key. In the case of the AMD SEV-SNP-specific implementation, this is done with the HOST_DATA field. For intel TDX, through the MRCONFIGID field.

The method of the present invention relies on conventional uni-directional authentication and remote attestation protocols to ensure that the virtual memory contents and a public, immutable identifier system along with virtual machine early abort in case of reception of an invalid/unexpected key, to ensure a level of trust analogous to mutual cryptographic authentication.

The combination of a strict authentication of the code running within the virtual machine 4 (through remote attestation), an immutable identifier (HOST_DATA or MRCONFIGID), un-exploitable code before the execution of the attested launch protocol and a defined mechanism to verify the validity of the received key allow obtaining most of the benefits associated with an underlying authentication mechanism, namely, the impersonation of another arbitrary instance of a given virtual machine instance.

Embodiments can include features that are embedded in a computer program product, which, when loaded in an information processing system, is able to carry out the methods described. Computer program means or computer program in the present context mean any expression, in any language, code or notation, of a set of instructions intended to cause a system having an information processing capability to perform a particular function either directly or after conversion to another language. Such a computer program can be stored on a computer or machine-readable medium allowing data, instructions, messages or message packets, and other machine-readable information to be read from the medium. The computer or machine-readable medium may include non-volatile memory, such as ROM, Flash memory, Disk drive memory, CD-ROM, and other permanent storage. Additionally, a computer or machine-readable medium may include, for example, volatile storage such as RAM, buffers, cache memory, and network circuits. Furthermore, the computer or machine-readable medium may comprise computer or machine-readable information in a transitory state medium such as a network link and/or a network interface, including a wired network or a wireless network, that allow a device to read such computer or machine readable information.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

While there has been illustrated and described what are presently considered to be the preferred embodiments of the present invention, it will be understood by those skilled in the art that various other modifications may be made, and equivalents may be substituted.

Additionally, many modifications may be made to adapt a particular situation to the teachings of the present invention.

Furthermore, an embodiment of the present invention may not include all of the features described above. Therefore, it is intended that the present invention is not limited to the particular embodiments disclosed. The scope of the invention is defined by the appended claims.

## Claims

1. A method for performing a verified launch of a virtual machine, the method comprising:
- sending (100), from a virtual machine (4) to a server (2), a predetermined attested value, said attested value being set at launch of the virtual machine, inside a field of a remote attestation protocol running in a host system (10) underlying the virtual machine (4), wherein said predetermined attested value cannot be changed during the lifetime of the virtual machine;
- sending (102), from the server (2) to the virtual machine (4), a random challenge value as a confirmation reply;
- sending (104), from the virtual machine (4) to the server (2), an attestation report based on said predetermined attested value and random challenge value;
- checking (106) if the attestation report is valid and in positive case, authenticating (108) the virtual machine (4) with the server (2).

2. The method of claim 1, wherein the attestation report comprises:
- initial measurements of a memory (8) of the virtual machine (4);
- the random challenge value;
- the predetermined attested value.

3. The method of claims 1 or 2, wherein checking (106) if the attestation report is valid comprises checking if the initial measurements correspond to expected predefined measurements, if the random challenge value of the attestation report corresponds to the random challenge value sent by the server (2) and if the predetermined attested value of the attestation report corresponds to the one sent from the virtual machine (4) to the server (2).

4. The method of any of the preceding claims, wherein authenticating (108) the virtual machine (4) with the server (2) comprises sending to the virtual machine (4) a predetermined cryptographic key.

5. The method of any of the preceding claims, wherein the predetermined attested value is set inside the SEV-SNP HOST_DATA field of an AMD SEV-SNP remote attestation protocol.

6. The method of any of the claims 1 to 4, wherein the predetermined attested value is set inside the Trust Domain MRCONFIGID field of an Intel TDX remote attestation protocol.

7. A computer program product comprising computer readable instructions which, when implemented on a system comprising a server (2) and a virtual machine (4), perform all of the steps of the method of any of claims 1-6.

8. A computer readable medium comprising the computer program of claim 7.

## Patentansprüche

1. Verfahren zum Durchführen eines verifizierten Starts einer virtuellen Maschine, wobei das Verfahren umfasst:
- Senden (100), von einer virtuellen Maschine (4) an einen Server (2), eines vorbestimmten bestätigten Werts, wobei der bestätigte Wert bei einem Start der virtuellen Maschine innerhalb eines Feldes eines Remote-Bestätigungsprotokolls festgelegt wird, welches in einem Hostsystem (10) ausgeführt wird, das der virtuellen Maschine (4) zugrunde liegt, wobei der vorbestimmte bestätigte Wert während der Lebensdauer der virtuellen Maschine nicht geändert werden kann;
- Senden (102), von dem Server (2) an die virtuelle Maschine (4), eines zufälligen Herausforderungswerts als eine Bestätigungsantwort;
- Senden (104), von der virtuellen Maschine (4) an den Server (2), eines Bestätigungsberichts auf Grundlage des vorbestimmten bestätigten Werts und des zufälligen Herausforderungswerts;
- Überprüfen (106), ob der Bestätigungsbericht gültig ist, und in einem positiven Fall Authentifizieren (108) der virtuellen Maschine (4) mit dem Server (2).

2. Verfahren nach Anspruch 1, wobei der Bestätigungsbericht umfasst:
- Anfangsmessungen eines Speichers (8) der virtuellen Maschine (4);
- den zufälligen Herausforderungswert;
- den vorbestimmten bestätigten Wert.

3. Verfahren nach Anspruch 1 oder 2, wobei das Überprüfen (106), ob der Bestätigungsbericht gültig ist, ein Überprüfen umfasst, ob die Anfangsmessungen den erwarteten vordefinierten Messungen entsprechen, ob der zufällige Herausforderungswert des Bestätigungsberichts dem durch den Server (2) gesendeten zufälligen Herausforderungswert entspricht und ob der vorbestimmte bestätigte Wert des Bestätigungsberichts demjenigen entspricht, welcher von der virtuellen Maschine (4) an den Server (2) gesendet worden ist.

4. Verfahren nach einem der vorhergehenden Ansprüche, wobei das Authentifizieren (108) der virtuellen Maschine (4) mit dem Server (2) ein Senden eines vorbestimmten kryptografischen Schlüssels an die virtuelle Maschine (4) umfasst.

5. Verfahren nach einem der vorhergehenden Ansprüche, wobei der vorbestimmte bestätigte Wert innerhalb des SEV-SNP-HOST_DATA-Feldes eines AMD SEV-SNP-Remote-Bestätigungsprotokolls festgelegt wird.

6. Verfahren nach einem der Ansprüche 1 bis 4, wobei der vorbestimmte bestätigte Wert innerhalb des Trust Domain MRCONFIGID-Feldes eines Intel TDX-Remote-Bestätigungsprotokolls festgelegt wird.

7. Computerprogrammprodukt, umfassend computerlesbare Anweisungen, welche, wenn sie auf einem System implementiert werden, welches einen Server (2) und eine virtuelle Maschine (4) umfasst, alle Schritte des Verfahrens nach einem der Ansprüche 1-6 durchführen.

8. Computerlesbares Medium, umfassend das Computerprogramm nach Anspruch 7.

## Revendications

1. Procédé pour effectuer un lancement vérifié d'une machine virtuelle, le procédé comprenant :
- l'envoi (100) d'une valeur attestée prédéterminée d'une machine virtuelle (4) à un serveur (2), ladite valeur attestée étant définie au lancement de la machine virtuelle, dans un champ d'un protocole d'attestation à distance s'exécutant dans un système hôte (10) sous-jacent à la machine virtuelle (4), dans lequel ladite valeur attestée prédéterminée ne peut pas être modifiée pendant la durée de vie de la machine virtuelle ;
- l'envoi (102) d'une valeur défi aléatoire en tant que réponse de confirmation, du serveur (2) à la machine virtuelle (4) ;
- l'envoi (104), de la machine virtuelle (4) au serveur (2), d'un rapport d'attestation basé sur ladite valeur attestée prédéterminée et ladite valeur défi aléatoire ;
- la vérification (106) de la validité du rapport d'attestation et dans le cas positif, l'authentification (108) de la machine virtuelle (4) auprès du serveur (2).

2. Procédé selon la revendication 1, dans lequel le rapport d'attestation comprend :
- des mesures initiales d'une mémoire (8) de la machine virtuelle (4) ;
- la valeur défi aléatoire ;
- la valeur attestée prédéterminée.

3. Procédé selon les revendications 1 ou 2, dans lequel la vérification (106) de la validité du rapport d'attestation comprend la vérification de la correspondance des mesures initiales avec des mesures attendues prédéfinies, de la correspondance de la valeur défi aléatoire du rapport d'attestation avec la valeur défi aléatoire envoyée par le serveur (2) et de la correspondance de la valeur attestée prédéterminée du rapport d'attestation avec celle envoyée par la machine virtuelle (4) au serveur (2).

4. Procédé selon l'une quelconque des revendications précédentes, dans lequel l'authentification (108) de la machine virtuelle (4) auprès du serveur (2) comprend l'envoi à la machine virtuelle (4) d'une clé cryptographique prédéterminée.

5. Procédé selon l'une quelconque des revendications précédentes, dans lequel la valeur attestée prédéterminée est définie dans le champ SEV-SNP HOST_DATA d'un protocole d'attestation à distance AMD SEV-SNP.

6. Procédé selon l'une quelconque des revendications 1 à 4, dans lequel la valeur attestée prédéterminée est définie dans le champ Trust Domain MRCONFIGID d'un protocole d'attestation à distance Intel TDX.

7. Produit programme d'ordinateur comprenant des instructions lisibles par ordinateur qui, lorsqu'elles sont mises en œuvre sur un système comprenant un serveur (2) et une machine virtuelle (4), réalisent toutes les étapes du procédé selon l'une quelconque des revendications 1-6.

8. Support lisible par ordinateur comprenant le programme d'ordinateur selon la revendication 7.
